# EUROPEAN PATENT APPLICATION

(11) **EP 4 769 813 A1**
(43) Date of publication of application: **01.07.2026**
(21) Application number: 25833491.1
(22) Date of filing: 01.07.2025
(51) Int. Cl.: H01M 50/533, H01M 50/538, H01M 50/54, H01M 50/536, H01M 10/0585, H01M 10/0587, H01M 10/04

(54) **SECONDARY BATTERY AND MANUFACTURING METHOD THEREOF**

(30) Priority: 02.07.2024 KR 20240087158
(71) Applicant: LG ENERGY SOLUTION, LTD., Seoul 07335 (KR)
(72) Inventor: Kim, Seung Cheol, Daejeon 34122 (KR); Bin, Seung Seok, Daejeon 34122 (KR); Pyo, Jung Ho, Daejeon 34122 (KR)
(74) Representative: Plasseraud IP
(86) International application number: PCT/KR2025/009290
(87) International publication number: WO 2026/010305

(57) **Abstract**

A secondary battery is provided including: a first group of unit electrodes and a second group of unit electrodes stacked in a first direction; first electrode tabs extending from one end of the first group of unit electrodes and joined to each other; second electrode tabs extending from one end of the second group of unit electrodes and joined to each other; and an electrode lead electrically connected to the first electrode tabs and the second electrode tabs, wherein the first electrode tabs comprise a first merge part, a first tab ending part extending substantially parallel to an extension direction of the first group of unit electrodes, and a first connection part connecting the first merge part and the first tab ending part, and the first merge part and the first connection part are connected in a V-shape.

## Description

### [Technical Field]

The present disclosure relates to a secondary battery and a manufacturing method thereof, and more specifically, to a high-capacity secondary battery having high energy density and a manufacturing method thereof.

This application claims the benefit of priority from Korean Patent Application No. 10-2024-0087158, filed on July 2, 2024, the entire contents disclosed therein are incorporated by reference into this disclosure.

### [Background]

Secondary batteries are batteries that can be charged and discharged, unlike primary batteries, which cannot be charged, and are widely used in electronic devices such as cell phones, laptops, and camcorders, or in electric vehicles. In particular, lithium secondary batteries have a larger capacity than nickel-cadmium batteries or nickel metal hydride batteries and have high energy density per unit weight, so the utilization is rapidly increasing.

Various manufacturing methods have been proposed and applied to manufacture secondary batteries, but various efforts are being made to increase energy density.

### [Summary]

### [Technical Problem]

The first technical problem to be solved by the present disclosure is to provide a high-capacity secondary battery having high energy density.

The second technical problem to be solved by the present disclosure is to provide a manufacturing method of a high-capacity secondary battery having high energy density.

### [Technical Solution]

To achieve the first technical problem, the present disclosure provides a secondary battery including: a first group of unit electrodes and a second group of unit electrodes stacked in a first direction; first electrode tabs extending from one end of the first group of unit electrodes in a second direction intersecting the first direction and joined to each other; second electrode tabs extending from one end of the second group of unit electrodes in the second direction and joined to each other; and an electrode lead electrically connected to the first electrode tabs and the second electrode tabs, wherein the first electrode tabs include a first merge part, a first tab ending part extending in an extension direction of the first group of unit electrodes, and a first connection part connecting the first merge part and the first tab ending part, and the first merge part and the first connection part are connected in a V-shape.

In some embodiments, the first merge part may be a part of a part where the entirety of the first electrode tabs is joined.

In some embodiments, an inner end of the first merge part may be disposed substantially at a center in a thickness direction of the first group of unit electrodes.

In some embodiments, an outer end of the first merge part may be located farther from a plane between the first group of unit electrodes and the second group of unit electrodes compared to the inner end.

In some embodiments, the first merge part and the first connection part may form an acute angle of 20 degrees or less.

In some embodiments, the first connection part and the first tab ending part may have an included angle greater than 90 degrees. In some embodiments, the included angle between the first connection part and the first tab ending part may be less than 120 degrees.

In some embodiments, the first electrode tabs and the second electrode tabs may have a cross-sectional shape that is symmetrical with respect to a plane between the first group of unit electrodes and the second group of unit electrodes.

In some embodiments, the second electrode tabs may include a second merge part, a second tab ending part extending substantially parallel to an extension direction of the second group of unit electrodes, and a second connection part connecting the second merge part and the second tab ending part, and the second merge part and the second connection part may be connected in a V-shape.

In some embodiments, in a thickness direction of the secondary battery, the first tab ending part and the second tab ending part may be located substantially at the same level as each other.

In some embodiments, the secondary battery may further include a common electrode part connected to the first tab ending part and the second tab ending part, and the first electrode tabs and the second electrode tabs may be connected to the electrode lead through the common electrode part.

In some embodiments, the electrode lead may be coupled to the common electrode part, and the electrode lead may be disposed to at least partially overlap the first tab ending part and the second tab ending part.

In some embodiments, the first merge part and the second merge part may be offset from each other in a direction perpendicular to the thickness direction of the secondary battery.

In some embodiments, the first electrode tabs and the second electrode tabs may be disposed so as not to overlap each other in the thickness direction of the secondary battery.

In some embodiments, the first merge part and the second merge part may be symmetrical with respect to a plane between the first group of unit electrodes and the second group of unit electrodes.

In some embodiments, the second merge part and the second connection part may form an acute angle of 20 degrees or less.

In some embodiments, the first electrode tabs and the second electrode tabs may at least partially overlap in the thickness direction of the secondary battery.

In some embodiments, the electrode lead may be disposed between the first tab ending part and the second tab ending part.

To achieve the second technical problem, the present disclosure provides a method for manufacturing a secondary battery, the method including: providing a first group of unit electrodes and a second group of unit electrodes stacked in a first direction, wherein the first group of unit electrodes are provided at one end thereof with first electrode tabs extending from the first group of unit electrodes in a second direction intersecting the first direction and joined to each other, the second group of unit electrodes are provided at one end thereof with second electrode tabs extending from the second group of unit electrodes in the second direction and joined to each other, the first electrode tabs include a first merge part, a first tab ending part extending in an extension direction of the first group of unit electrodes, and a first connection part connecting the first merge part and the first tab ending part, and the second electrode tabs include a second merge part, a second tab ending part extending in an extension direction of the second group of unit electrodes, and a second connection part connecting the second merge part and the second tab ending part; electrically connecting the first tab ending part and the second tab ending part to an electrode lead; tilting the first merge part such that an outer end of the first merge part moves away from the first tab ending part about an inner end of the first merge part; and tilting the second merge part such that an outer end of the second merge part moves away from the second tab ending part about an inner end of the second merge part.

In some embodiments, the step of providing the first group of unit electrodes and the second group of unit electrodes may include: bending the first electrode tabs joined to each other to form the first merge part, the first tab ending part, and the first connection part; and bending the second electrode tabs joined to each other to form the second merge part, the second tab ending part, and the second connection part.

### [Advantageous Effects]

The secondary battery according to embodiments of the present disclosure has an effect of manufacturing a high-capacity secondary battery with high energy density.

The technical effects that can be obtained in exemplary embodiments of the present disclosure are not limited to the above-described effects, and other effects not mentioned can be clearly understood by a person skilled in the art from the description of the disclosure described below. In other words, unintended effects of implementing the exemplary embodiments of the present disclosure may also be derived from the exemplary embodiments of the present disclosure by a person skilled in the art.

### [Brief Description of the Drawings]

FIG. 1 is a front view illustrating a secondary battery according to an embodiment of the present disclosure.
FIG. 2 is a schematic view illustrating an electrode assembly and main components accommodated in a battery case of the secondary battery of FIG. 1.
FIG. 3 is an exploded perspective view of the electrode assembly and main components of FIG. 2.
FIG. 4 is a cross-sectional view illustrating a cross-section of the electrode assembly and main components illustrated in FIG. 2.
FIG. 5 is a partially enlarged view illustrating portion A of FIG. 4 in an enlarged manner.
FIG. 6 is a schematic view illustrating an electrode assembly and main components of a secondary battery according to another embodiment of the present disclosure.
FIGS. 7a to 11b are schematic views illustrating a method for manufacturing a secondary battery according to an embodiment of the present disclosure.
FIG. 12 is a schematic cross-sectional view illustrating an exemplary principle in which the first electrode tabs and the second electrode tabs having the cross-sectional shape illustrated in FIG. 10b are converted into the first electrode tabs and the second electrode tabs having the cross-sectional shape illustrated in FIG. 11b by an external force.
FIG. 13 is a perspective view of a battery pack according to exemplary embodiments of the present disclosure.
FIG. 14 is a perspective view illustrating some elements of a battery pack according to exemplary embodiments of the present disclosure.
FIG. 15 is a view schematically illustrating the configuration of a vehicle according to an embodiment of the present disclosure.

### [Detailed Description]

Hereinafter, preferred embodiments of the present disclosure concept will be described in detail with reference to the accompanying drawings. However, embodiments of the present disclosure concept may be modified in various different forms, and it should not be interpreted that the scope of the present disclosure concept is limited by the embodiments described below. It is preferred that the embodiments of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific embodiments and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some embodiments are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, embodiments of the present disclosure should not be construed as limited to the specific forms of the areas shown herein, and should include, for example, variations in form resulting from manufacturing processes. All terms "and/or" used herein are included each and every combination of one or more of the components mentioned. In addition, the term "substrate" as used herein may refer to the substrate itself, or to a stacked structure including the substrate and any predetermined layers or films, etc. formed on the surface thereof. In addition, the term "surface of the substrate" as used herein may refer to the exposed surface of the substrate itself, or to the outer surface of a predetermined layer or film, etc. formed on the substrate.

### (first embodiment)

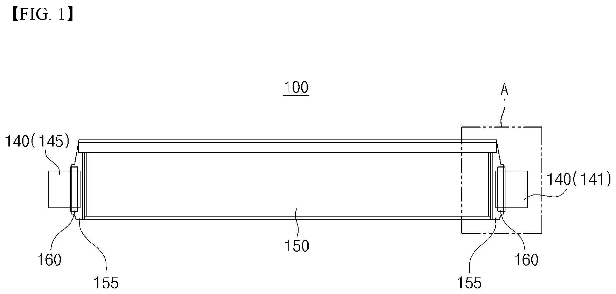

FIG. 1 is a front view illustrating a secondary battery 100 according to an embodiment of the present disclosure.

Referring to FIG. 1, the secondary battery 100 according to an embodiment of the present disclosure includes an electrode assembly (not shown) including a positive electrode, a negative electrode, and a separator interposed between the positive electrode and the negative electrode, and a battery case 150 in which the electrode assembly is mounted. Here, the secondary battery 100 may include an electrolytic solution together with the electrode assembly (not shown) inside the battery case 150.

As an example, the electrolytic solution means a liquid-state electrolyte, and ions can move between the positive electrode and the negative electrode, and the secondary battery can perform charge and discharge through such ion exchange between the positive electrode and the negative electrode. The electrolyte used in the present disclosure may include an organic liquid electrolyte, an inorganic liquid electrolyte, a solid polymer electrolyte, a gel-type polymer electrolyte, a solid inorganic electrolyte, a molten inorganic electrolyte, and the like that can be used in manufacturing lithium secondary batteries, but is not limited thereto.

In addition, the battery case 150 includes a sealing part 155 having a structure sealed by heat fusion along an outer periphery. The battery case 150 may be a laminate sheet including a resin layer and a metal layer. In some embodiments, the battery case 150 is made of a laminate sheet, and may be composed of an outer resin layer forming an outermost layer, a barrier metal layer preventing penetration of materials, and an inner resin layer for sealing. However, the embodiment of the present disclosure is not limited to the above-described structure, and may be replaced with a battery case of a secondary battery having another general structure.

In addition, the electrode assembly (not shown) may have a jelly-roll type (wound type), stack type (stacked type), or hybrid type (stack/folding type) structure. More specifically, the electrode assembly (not shown) may include a positive electrode, a negative electrode, and a separator disposed therebetween.

In addition, in the present embodiment, the battery case 150 may have a structure in which an electrode lead 140 electrically connected to a plurality of electrode tabs (not shown) extending from the electrode assembly (not shown) is sealed so as to be exposed to the outside. More specifically, the electrode lead 140 may protrude in an outward direction of the battery case 150 through the sealing part 155. In addition, in the present embodiment, a lead film 160 may be located between the electrode lead 140 and the sealing part 155.

The lead film 160 not only prevents a short circuit from occurring between the electrode lead 140 and the barrier metal layer of the battery case 150, but also can improve the sealing property of the battery case 150. When the lead film 160 is provided, a phenomenon in which adhesion is deteriorated during heat fusion of the electrode lead 140 made of a metal material and the battery case 150 made of a polymer material can be prevented. In addition, the lead film 160 is preferably made of an insulating material and can block current from being applied from the electrode lead 140 to the battery case 150. The lead film 160 is made of a film having insulating properties and heat fusibility. The lead film 160 may include, for example, any one or more material layers selected from polyimide (PI), polypropylene, polyethylene, and polyethylene terephthalate (PET). In some embodiments, the length of the lead film 160 may be increased to serve to prevent a short circuit of a part of the electrode lead 140 exposed outside the battery case 150.

In some embodiments, the electrode lead 140 includes a positive electrode lead 141 electrically connected to a positive electrode tab included in the electrode assembly and a negative electrode lead 145 electrically connected to a negative electrode tab included in the electrode assembly.

In some embodiments, the secondary battery 100 may be a bidirectional pouch battery cell in which the positive electrode lead 141 and the negative electrode lead 145 protrude on both sides of the battery case 150, respectively. However, the present disclosure is not limited thereto, and the secondary battery 100 may be a unidirectional pouch battery cell in which the positive electrode lead 141 and the negative electrode lead 145 are disposed together on the same side of the battery case 150. In other embodiments, the secondary battery 100 may be a secondary battery in which an electrode assembly is accommodated in a prismatic or cylindrical battery case.

Hereinafter, although description will be made based on a bidirectional pouch battery cell, the same or similar description may be applied to a unidirectional pouch battery cell. A person skilled in the art will understand that the following description can also be applied to a unidirectional pouch battery cell, a prismatic secondary battery, and a cylindrical battery case.

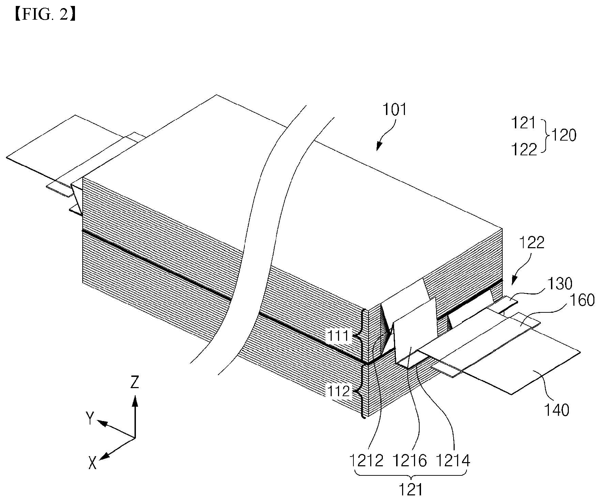

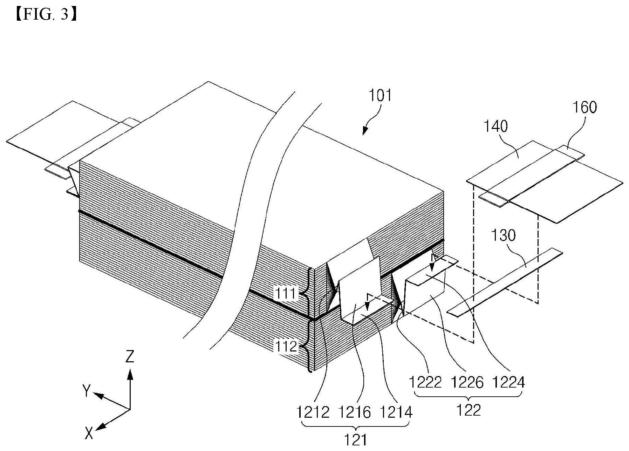

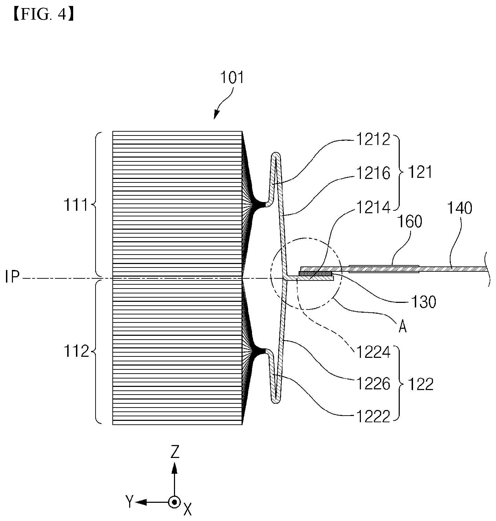

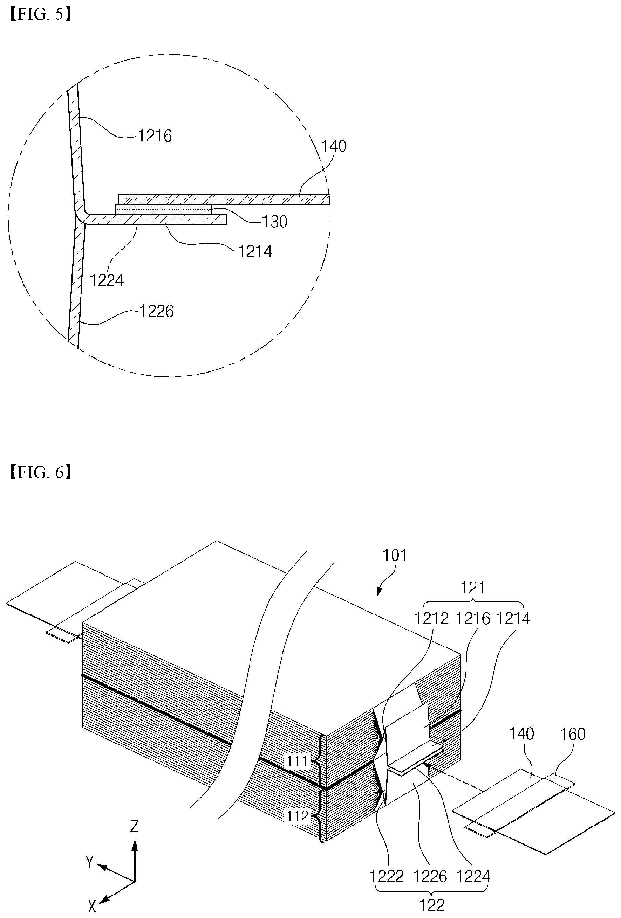

FIG. 2 is a schematic view illustrating an electrode assembly 101 and main components accommodated in the battery case 150 of the secondary battery 100 of FIG. 1. FIG. 3 is an exploded perspective view of the electrode assembly 101 and main components of FIG. 2. FIG. 4 is a cross-sectional view illustrating a cross-section of the electrode assembly 101 and main components illustrated in FIG. 2. FIG. 5 is a partially enlarged view illustrating part A of FIG. 4 in an enlarged manner.

Referring to FIGS. 2 to 5, the electrode assembly 101 includes a first group of unit electrodes 111 and a second group of unit electrodes 112 stacked in a first direction (e.g., thickness direction) along the Z-axis. The first group of unit electrodes 111 and the second group of unit electrodes 112 may extend by a predetermined length in a second direction (e.g., length direction) along the Y-axis. In some embodiments, the second direction may be any direction intersecting the first direction. The first group of unit electrodes 111 and the second group of unit electrodes 112 may extend by a predetermined width in a third direction (e.g., width direction) along the X-axis. In some embodiments, the third direction may be any direction intersecting the first direction and the second direction. The second group of unit electrodes 112 may be stacked while in contact with the first group of unit electrodes 111.

The electrode assembly 101 is formed by alternately stacking electrodes and separators. First, a positive electrode and a negative electrode are manufactured by applying a slurry in which an electrode active material, a binder, and a plasticizer are mixed to a positive electrode current collector and a negative electrode current collector, and by stacking them on both sides of a separator, an electrode assembly 101 having a predetermined shape can be formed.

Specifically, the electrode assembly 101 includes two types of electrodes such as a positive electrode and a negative electrode, and a separator interposed between the electrodes to insulate the electrodes from each other. Such electrode assemblies 101 include stack type, jelly roll type, cylindrical type, stack and folding type, and the like. The two types of electrodes, that is, the positive electrode and the negative electrode, have a structure in which an active material slurry is applied to an electrode current collector in the form of a metal foil or a metal mesh including aluminum and copper, respectively. The slurry may be typically formed by stirring particulate active material, auxiliary conductor, binder, plasticizer, and the like in a state in which a solvent is added. The solvent is removed in a subsequent process.

As illustrated in FIGS. 2 and 3, the electrode assembly 101 includes electrode tabs 120. The electrode tabs 120 are respectively connected to the positive electrode and the negative electrode of the electrode assembly 101, protrude from the electrode assembly 101 to one side outside, and become a path through which electrons can move between the inside and the outside of the electrode assembly 101. The current collector of the electrode assembly 101 may include a coated part and an uncoated part. The coated part is a part where the electrode active material is applied, and the uncoated part is a part where the electrode active material is not applied. The electrode tabs 120 may be formed by cutting the uncoated part or by connecting a separate conductive member to the uncoated part by ultrasonic welding or the like. As illustrated in FIGS. 2 and 3, the electrode tabs 120 may protrude side by side in the same direction from one side of the electrode assembly 101, but are not limited thereto and may protrude in different directions.

The electrode tabs 120 include first electrode tabs 121 extending from one end of the first group of unit electrodes 111 and joined to each other, and second electrode tabs 122 extending from one end of the second group of unit electrodes 112 and joined to each other.

The first electrode tabs 121 may include a first merge part 1212 located close to the first group of unit electrodes 111, a first tab ending part 1214 extending substantially parallel to an extension direction of the first group of unit electrodes 111, and a first connection part 1216 connecting the first merge part 1212 and the first tab ending part 1214. In some embodiments, the first tab ending part 1214 may extend in the extension direction of the first group of unit electrodes 111. Here, the extension direction of the first group of unit electrodes 111 is a direction along the longest dimension of the first group of unit electrodes 111.

In some embodiments, the first merge part 1212, the first connection part 1216, and the first tab ending part 1214 may each be parts of a part where the first electrode tabs 121 are overlapped and joined. In particular, in the first merge part 1212, electrode tabs of all electrodes belonging to the first group of unit electrodes 111 may be joined.

The first merge part 1212 may be adjacent to a terrace part, which is a part where the first electrode tabs 121 gather together to be joined. In the first electrode tabs 121, a part gathered and joined at the terrace part may be connected to an inner end of the first merge part 1212. In some embodiments, the inner end may be disposed substantially at a center in the thickness direction of the first group of unit electrodes 111.

In some embodiments, the first merge part 1212 may extend in a direction away from a plane IP, which is an interface between the first group of unit electrodes 111 and the second group of unit electrodes 112. In some embodiments, the first merge part 1212 may extend obliquely in a direction away from the plane IP. In some embodiments, an outer end of the first merge part 1212 may be located farther from the plane IP compared to the inner end. The inner end is one end of the first merge part 1212, which is an end closer to the first group of unit electrodes 111 before the first electrode tabs 121 are bent. The outer end is the other end of the first merge part 1212, which is an end farther from the first group of unit electrodes 111 before the first electrode tabs 121 are bent.

In some embodiments, the first merge part 1212 may extend in a direction away from the first group of unit electrodes 111. In some embodiments, the first merge part 1212 may extend in a direction away from the plane IP and the first group of unit electrodes 111.

In some embodiments, the first merge part 1212 may have a generally flat plane. In some embodiments, the first merge part 1212 may be generally flat but may partially include a curved surface having a predetermined curvature.

In some embodiments, the first connection part 1216 is connected to the outer end of the first merge part 1212 and may extend toward the plane IP. One end of the first connection part 1216 is connected to the outer end of the first merge part 1212, and the other end of the first connection part 1216 may extend toward the plane IP. In some embodiments, the other end of the first connection part 1216 may extend at least to the vicinity of the plane IP. In some embodiments, the other end of the first connection part 1216 may extend to the plane IP.

In some embodiments, the first connection part 1216 may extend in a direction away from the first group of unit electrodes 111 while extending toward the plane IP. That is, the other end of the first connection part 1216 may be located farther from the first group of unit electrodes 111 compared to the outer end of the first merge part 1212. In some embodiments, the first connection part 1216 may extend obliquely toward the plane IP with respect to the plane IP. As described above, the first connection part 1216 is a part of a part where the first electrode tabs 121 are overlapped and joined.

In some embodiments, the first connection part 1216 may have a generally flat plane. In some embodiments, the first connection part 1216 may be generally flat but may partially include a curved surface having a predetermined curvature.

A main plane forming the first connection part 1216 and a main plane forming the first merge part 1212 form an acute angle with each other and may be connected in a V-shape. In some embodiments, the main plane forming the first connection part 1216 and the main plane forming the first merge part 1212 may form an acute angle of 20 degrees or less. In some embodiments, the main plane forming the first connection part 1216 and the main plane forming the first merge part 1212 may form an acute angle of 15 degrees or less, 10 degrees or less, or 5 degrees or less.

In some embodiments, the first connection part 1216 and the first merge part 1212 may form an acute angle at a part where they meet. In some embodiments, the first connection part 1216 and the first merge part 1212 may form an acute angle of 20 degrees or less at a part where they meet. In some embodiments, the first connection part 1216 and the first merge part 1212 may form an acute angle of 15 degrees or less, 10 degrees or less, or 5 degrees or less at a part where they meet.

In some embodiments, an inner end of the first tab ending part 1214 may be connected to the other end of the first connection part 1216. The first tab ending part 1214 may extend substantially parallel to the plane IP. In some embodiments, the first tab ending part 1214 may extend substantially parallel to the extension direction of the first group of unit electrodes 111.

In some embodiments, the first tab ending part 1214 may have a generally flat plane. In some embodiments, the first tab ending part 1214 may be generally flat but may partially include a curved surface having a predetermined curvature.

A main plane forming the first connection part 1216 and a main plane forming the first tab ending part 1214 may form an obtuse angle with each other. In some embodiments, the main plane forming the first connection part 1216 and the main plane forming the first tab ending part 1214 may have an included angle greater than 90 degrees. In some embodiments, the main plane forming the first connection part 1216 and the main plane forming the first tab ending part 1214 may have an included angle smaller than 120 degrees.

In some embodiments, the first connection part 1216 and the first tab ending part 1214 may form an obtuse angle at the part where they meet. In some embodiments, the first connection part 1216 and the first tab ending part 1214 may have an included angle greater than 90 degrees at a part where they meet. In some embodiments, the first connection part 1216 and the first tab ending part 1214 may have an included angle of less than 120 degrees at a part where they meet.

The second electrode tabs 122 may include a second merge part 1222 located close to the second group of unit electrodes 112, a second tab ending part 1224 extending substantially parallel to an extension direction of the second group of unit electrodes 112, and a second connection part 1226 connecting the second merge part 1222 and the second tab ending part 1224. In some embodiments, the second tab ending part 1224 may extend in the extension direction of the second group of unit electrodes 112. Here, the extension direction of the second group of unit electrodes 112 is a direction along the longest dimension of the second group of unit electrodes 112.

In some embodiments, the second merge part 1222, the second connection part 1226, and the second tab ending part 1224 may each be parts of a part where the second electrode tabs 122 are overlapped and joined. In particular, in the second merge part 1222, electrode tabs of all electrodes belonging to the second group of unit electrodes 112 may be joined.

The second merge part 1222 may be adjacent to a terrace part, which is a part where the second electrode tabs 122 gather together to be joined. In the second electrode tabs 122, a part gathered and joined at the terrace part may be connected to an inner end of the second merge part 1222. In some embodiments, the inner end may be disposed substantially at a center in the thickness direction of the second group of unit electrodes 112.

In some embodiments, the second merge part 1222 may extend in a direction away from the plane IP, which is an interface between the first group of unit electrodes 111 and the second group of unit electrodes 112. In some embodiments, the second merge part 1222 may extend obliquely in a direction away from the plane IP. In some embodiments, an outer end of the second merge part 1222 may be located farther from the plane IP compared to the inner end. The inner end is one end of the second merge part 1222, which is an end closer to the second group of unit electrodes 112 before the second electrode tabs 122 are bent. The outer end is the other end of the second merge part 1222, which is an end farther from the second group of unit electrodes 112 before the second electrode tabs 122 are bent.

In some embodiments, the second merge part 1222 may extend in a direction away from the second group of unit electrodes 112. In some embodiments, the second merge part 1222 may extend in a direction away from the plane IP and the second group of unit electrodes 112.

In some embodiments, the second merge part 1222 may have a generally flat plane. In some embodiments, the second merge part 1222 may be generally flat but may partially include a curved surface having a predetermined curvature.

In some embodiments, the second connection part 1226 is connected to the outer end of the second merge part 1222 and may extend toward the plane IP. One end of the second connection part 1226 is connected to the outer end of the second merge part 1222, and the other end of the second connection part 1226 may extend toward the plane IP. In some embodiments, the other end of the second connection part 1226 may extend at least to the vicinity of the plane IP. In some embodiments, the other end of the second connection part 1226 may extend to the plane IP.

In some embodiments, the second connection part 1226 may extend in a direction away from the second group of unit electrodes 112 while extending toward the plane IP. That is, the other end of the second connection part 1226 may be located farther from the second group of unit electrodes 112 compared to the outer end of the second merge part 1222. In some embodiments, the second connection part 1226 may extend obliquely toward the plane IP with respect to the plane IP. As described above, the second connection part 1226 is a part of a part where the second electrode tabs 122 are overlapped and joined.

In some embodiments, the second connection part 1226 may have a generally flat plane. In some embodiments, the second connection part 1226 may be generally flat but may partially include a curved surface having a predetermined curvature.

A main plane forming the second connection part 1226 and a main plane forming the second merge part 1222 form an acute angle with each other and may be connected in a V-shape. In some embodiments, the main plane forming the second connection part 1226 and the main plane forming the second merge part 1222 may form an acute angle of 20 degrees or less. In some embodiments, the main plane forming the second connection part 1226 and the main plane forming the second merge part 1222 may form an acute angle of 15 degrees or less, 10 degrees or less, or 5 degrees or less.

In some embodiments, the second connection part 1226 and the second merge part 1222 may form an acute angle at a part where they meet. In some embodiments, the second connection part 1226 and the second merge part 1222 may form an acute angle of 20 degrees or less at a part where they meet. In some embodiments, the second connection part 1226 and the second merge part 1222 may form an acute angle of 15 degrees or less, 10 degrees or less, or 5 degrees or less at a part where they meet.

In some embodiments, an inner end of the second tab ending part 1224 may be connected to the other end of the second connection part 1226. The second tab ending part 1224 may extend substantially parallel to the plane IP. In some embodiments, the second tab ending part 1224 may extend substantially parallel to the extension direction of the second group of unit electrodes 112.

In some embodiments, the second tab ending part 1224 may have a generally flat plane. In some embodiments, the second tab ending part 1224 may be generally flat but may partially include a curved surface having a predetermined curvature.

A main plane forming the second connection part 1226 and a main plane forming the second tab ending part 1224 may form an obtuse angle with each other. In some embodiments, the main plane forming the second connection part 1226 and the main plane forming the second tab ending part 1224 may have an included angle greater than 90 degrees. In some embodiments, the main plane forming the second connection part 1226 and the main plane forming the second tab ending part 1224 may have an included angle smaller than 120 degrees.

In some embodiments, the second connection part 1226 and the second tab ending part 1224 may form an obtuse angle at a part where they meet. In some embodiments, the second connection part 1226 and the second tab ending part 1224 may have an included angle greater than 90 degrees at a part where they meet. In some embodiments, the second connection part 1226 and the second tab ending part 1224 may have an included angle of less than 120 degrees at a part where they meet.

In some embodiments, the first electrode tabs 121 and the second electrode tabs 122 may have a cross-sectional shape that is symmetrical with respect to the plane IP. In some embodiments, the first merge part 1212 and the second merge part 1222 may have a cross-sectional shape that is symmetrical with respect to the plane IP. In some embodiments, the first connection part 1216 and the second connection part 1226 may have a cross-sectional shape that is symmetrical with respect to the plane IP. In some embodiments, the first tab ending part 1214 and the second tab ending part 1224 may have a cross-sectional shape that is symmetrical with respect to the plane IP.

In some embodiments, the width of the first tab ending part 1214 in the third direction may be substantially the same as the width of the second tab ending part 1224 in the third direction. In some embodiments, the first tab ending part 1214 and the second tab ending part 1224 may be spaced apart from each other in a third direction (e.g., width direction) so as not to overlap each other in a first direction (e.g., thickness direction). In some embodiments, the first tab ending part 1214 and the second tab ending part 1224 may be offset from each other in a direction perpendicular to the first direction (e.g., thickness direction) along the Z-axis such that there is a part that does not overlap in the first direction (e.g., thickness direction).

In some embodiments, the first tab ending part 1214 and the second tab ending part 1224 may be disposed substantially on the same plane. In some embodiments, the first tab ending part 1214 and the second tab ending part 1224 may be located substantially at the same level as each other in the first direction (e.g., thickness direction) of the secondary battery 100. In some embodiments, the first tab ending part 1214 and the second tab ending part 1224 may be disposed on a plane of an interface between the first group of unit electrodes 111 and the second group of unit electrodes 112.

The first electrode tabs 121 and the second electrode tabs 122 are electrically connected to an electrode lead 140. In some embodiments, the first electrode tabs 121 and the second electrode tabs 122 are electrically connected to one common electrode lead 140.

In some embodiments, the first electrode tabs 121 and the second electrode tabs 122 may be electrically connected to the electrode lead 140 through a common electrode part 130. In some embodiments, the first electrode tabs 121 may be connected to the common electrode part 130 at the first tab ending part 1214. In some embodiments, the second electrode tabs 122 may be connected to the common electrode part 130 at the second tab ending part 1224.

In some embodiments, the common electrode part 130 may be joined to an upper surface of the first tab ending part 1214 and the second tab ending part 1224. In some embodiments, the common electrode part 130 may be joined to a lower surface of the first tab ending part 1214 and the second tab ending part 1224. Here, the 'upper surface' may refer to a visible surface of the first tab ending part 1214 and the second tab ending part 1224 illustrated in FIG. 3. In addition, here, the 'lower surface' may refer to a surface opposite to the 'upper surface' of the first tab ending part 1214 and the second tab ending part 1224 illustrated in FIG. 3.

As described above, the first tab ending part 1214 and the second tab ending part 1224 may be disposed on a common plane. Furthermore, the common electrode part 130 may have a flat plate shape and may be disposed on the common plane.

In some embodiments, the common electrode part 130 may at least partially overlap the first tab ending part 1214 in the first direction (e.g., thickness direction). In addition, the common electrode part 130 may at least partially overlap the second tab ending part 1224 in the first direction (e.g., thickness direction).

In some embodiments, the first tab ending part 1214 and the second tab ending part 1224 may be joined to one surface of the common electrode part 130. At this time, the electrode lead 140 may be joined to the other surface of the common electrode part 130.

In FIG. 5, although the common electrode part 130 is illustrated as being interposed between the first tab ending part 1214 and the second tab ending part 1224 and the electrode lead 140, in some embodiments, the common electrode part 130 may be omitted.

As high capacity of secondary batteries is required, a plurality of unit electrodes is stacked, and accordingly, the thickness of the electrode assembly increases. If electrode tabs of unit electrodes located close to both ends in the thickness direction of the electrode assembly are bent sharply, mechanical properties may deteriorate, and if bent at the same slope as in the prior art, dead space in a lateral direction increases.

By allowing the electrode tabs to have a cross-section as described with reference to FIGS. 2 to 5 and coupling the electrode lead to end parts of the electrode tabs (i.e., the first tab ending part and the second tab ending part), dead space in the lateral direction of the secondary battery can be greatly reduced, and thereby energy density can be improved.

### (second embodiment)

FIG. 6 is a schematic view illustrating an electrode assembly 101 and main components of a secondary battery 100 according to another embodiment of the present disclosure. The embodiment illustrated in FIG. 6 differs from the embodiment illustrated in FIGS. 2 and 3 in the relative positions of the first electrode tabs 121 and the second electrode tabs 122. Therefore, hereinafter, the embodiment illustrated in FIG. 6 will be described focusing on these differences, and descriptions of overlapping parts will be omitted.

Referring to FIG. 6, the first electrode tabs 121 and the second electrode tabs 122 may be disposed to at least partially overlap each other in a first direction (e.g., thickness direction) along the Z-axis of the secondary battery 100. That is, in a third direction (e.g., width direction) of the secondary battery 100, a width direction position of the first electrode tabs 121 and a width direction position of the second electrode tabs 122 may at least partially overlap each other.

In some embodiments, the width direction position of the first electrode tabs 121 and the width direction position of the second electrode tabs 122 may be substantially the same as each other. FIG. 6 illustrates an example in which the width direction position of the first electrode tabs 121 and the width direction position of the second electrode tabs 122 are the same as each other.

In some embodiments, the first merge part 1212 and the second merge part 1222 may be disposed to at least partially overlap each other in the first direction (e.g., thickness direction) of the secondary battery 100. That is, in the third direction (e.g., width direction) of the secondary battery 100, a width direction position of the first merge part 1212 and a width direction position of the second merge part 1222 may at least partially overlap each other.

In some embodiments, the first tab ending part 1214 and the second tab ending part 1224 may be disposed to at least partially overlap each other in the first direction (e.g., thickness direction) of the secondary battery 100. That is, in the third direction (e.g., width direction) of the secondary battery 100, a width direction position of the first tab ending part 1214 and a width direction position of the second tab ending part 1224 may at least partially overlap each other.

In some embodiments, the electrode lead 140 may be disposed between an end of the first electrode tabs 121 and an end of the second electrode tabs 122. In some embodiments, the electrode lead 140 may be disposed between the first tab ending part 1214 and the second tab ending part 1224.

In some embodiments, the electrode lead 140 may directly contact the first tab ending part 1214 and the second tab ending part 1224. In some embodiments, the electrode lead 140 may be joined to a lower surface of the first tab ending part 1214 and an upper surface of the second tab ending part 1224.

### (third embodiment)

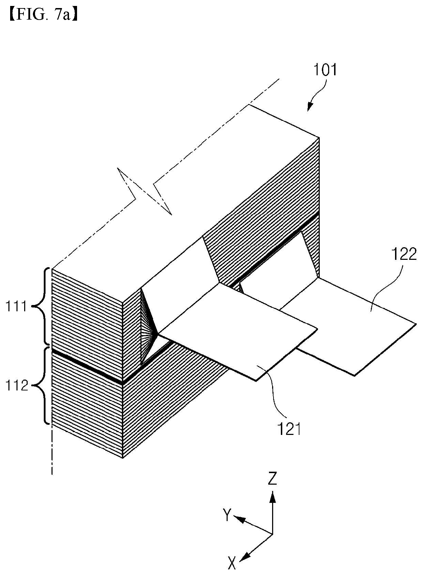

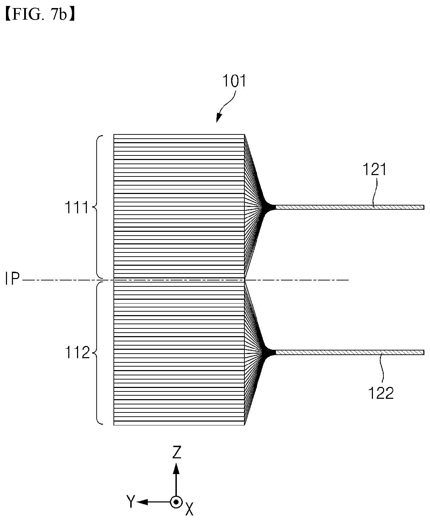

FIGS. 7a to 11b are schematic views illustrating a method for manufacturing a secondary battery 100 according to an embodiment of the present disclosure. In particular, FIGS. 7a, 8a, 9a, 10a, and 11a are perspective views illustrating a manufacturing process of one end of the electrode assembly 101. FIGS. 7b, 8b, 9b, 10b, and 11b are side cross-sectional views illustrating a manufacturing process of one end of the electrode assembly 101.

Referring to FIGS. 7a and 7b, a first group of unit electrodes 111 and a second group of unit electrodes 112 stacked in a first direction (e.g., thickness direction) may be provided.

The first group of unit electrodes 111 may be bi-cells and/or mono-cells having substantially the same structure. The first group of unit electrodes 111 aligned and stacked in the first direction (e.g., thickness direction) may have first electrode tabs 121 at the same position in a third direction (e.g., width direction). The first electrode tabs 121 may extend from one end of the first group of unit electrodes 111 and be joined to each other.

The second group of unit electrodes 112 may be bi-cells and/or mono-cells having substantially the same structure. The second group of unit electrodes 112 aligned and stacked in the first direction (e.g., thickness direction) may have second electrode tabs 122 at the same position in a third direction (e.g., width direction). The second electrode tabs 122 may extend from one end of the second group of unit electrodes 112 and be joined to each other.

The first group of unit electrodes 111 and the second group of unit electrodes 112 may be aligned and stacked in the first direction (e.g., thickness direction).

Although only one side of the electrode assembly 101 is illustrated in FIG. 7a, a person skilled in the art will understand that the opposite side of the electrode assembly 101 may be configured in the same manner.

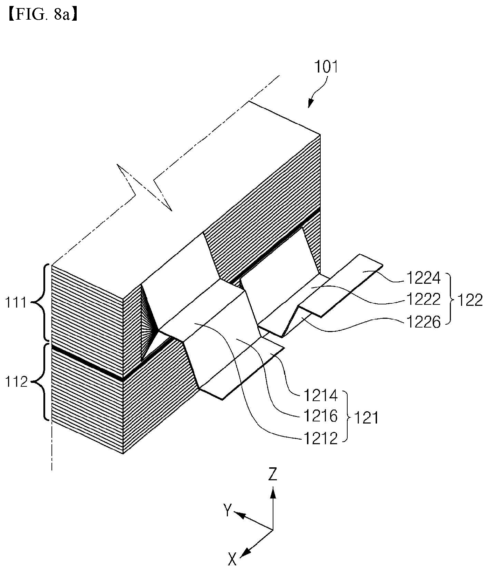

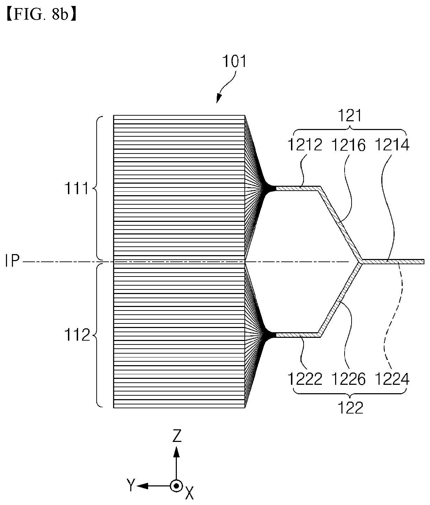

Referring to FIGS. 8a and 8b, the first electrode tabs 121 joined to each other may be bent to form a first merge part 1212, a first tab ending part 1214, and a first connection part 1216. At this time, an included angle between the first merge part 1212 and the first connection part 1216 may be greater than 90 degrees. For example, the included angle between the first merge part 1212 and the first connection part 1216 may be about 95 degrees to about 140 degrees. In addition, an included angle between the first tab ending part 1214 and the first connection part 1216 may be greater than 90 degrees. For example, the included angle between the first tab ending part 1214 and the first connection part 1216 may be about 95 degrees to about 140 degrees.

In addition, the second electrode tabs 122 joined to each other may be bent to form a second merge part 1222, a second tab ending part 1224, and a second connection part 1226. At this time, an included angle between the second merge part 1222 and the second connection part 1226 may be greater than 90 degrees. For example, the included angle between the second merge part 1222 and the second connection part 1226 may be about 95 degrees to about 140 degrees. In addition, an included angle between the second tab ending part 1224 and the second connection part 1226 may be greater than 90 degrees. For example, the included angle between the second tab ending part 1224 and the second connection part 1226 may be about 95 degrees to about 140 degrees.

In some embodiments, the first electrode tabs 121 and the second electrode tabs 122 may be bent simultaneously. In some embodiments, the first electrode tabs 121 and the second electrode tabs 122 may be bent sequentially. At this time, the first electrode tabs 121 may be bent first and then the second electrode tabs 122 may be bent. Alternatively, the second electrode tabs 122 may be bent first and then the first electrode tabs 121 may be bent.

An interface between the first group of unit electrodes 111 and the second group of unit electrodes 112 may be a part of a virtual plane IP.

In some embodiments, the first electrode tabs 121 may be bent such that the first tab ending part 1214 is located on the virtual plane IP. At this time, a bent part may be formed between the first merge part 1212 and the first connection part 1216 such that the first merge part 1212 is substantially parallel to the first tab ending part 1214.

In some embodiments, the second electrode tabs 122 may be bent such that the second tab ending part 1224 is located on the virtual plane IP. At this time, a bent part may be formed between the second merge part 1222 and the second connection part 1226 such that the second merge part 1222 is substantially parallel to the second tab ending part 1224.

Here, 'substantially parallel' may mean that an included angle formed by two directions is approximately 20 degrees or less in consideration of tolerance in a manufacturing process.

In the above, an example of bending the first electrode tabs 121 and the second electrode tabs 122 after stacking the first group of unit electrodes 111 and the second group of unit electrodes 112 has been described, but a person skilled in the art will understand that the first group of unit electrodes 111 having the bent first electrode tabs 121 and the second group of unit electrodes 112 having the bent second electrode tabs 122 may be prepared, and the first group of unit electrodes 111 and the second group of unit electrodes 112 may be stacked.

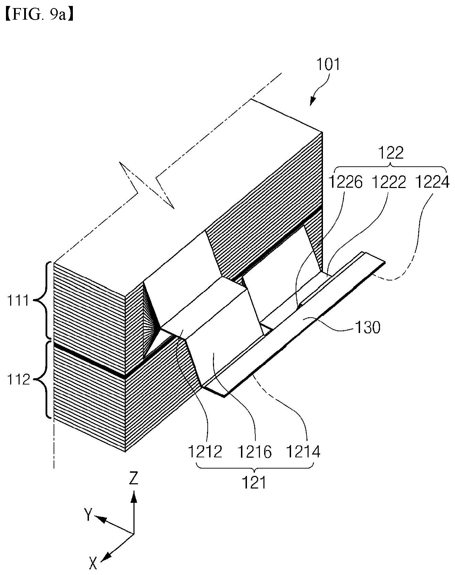

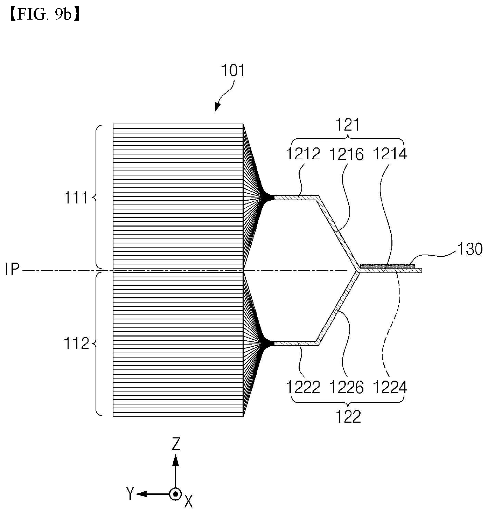

Referring to FIGS. 9a and 9b, a common electrode part 130 connecting the first electrode tabs 121 and the second electrode tabs 122 may be provided.

The common electrode part 130 may include an electrical conductor that electrically connects the first electrode tabs 121 and the second electrode tabs 122. In some embodiments, the common electrode part 130 may include copper (Cu), aluminum (Al), iron (Fe), nickel (Ni), tin (Sn), gold (Au), silver (Ag), platinum (Pt), or an alloy including one or more thereof.

In some embodiments, the common electrode part 130 may have a strip shape extending in a third direction (e.g., width direction). The common electrode part 130 may be connected to the first tab ending part 1214 of the first electrode tabs 121 and the second tab ending part 1224 of the second electrode tabs 122.

In some embodiments, the common electrode part 130 may be connected to the first tab ending part 1214 and the second tab ending part 1224 by welding. In some embodiments, the common electrode part 130 may be connected to the first tab ending part 1214 and the second tab ending part 1224 simultaneously. In some embodiments, the common electrode part 130 may be connected to the first tab ending part 1214 and the second tab ending part 1224 sequentially.

In some embodiments, the first tab ending part 1214 and the second tab ending part 1224 may be joined side by side on the same surface of the common electrode part 130. In some embodiments, the common electrode part 130 may be joined to an upper surface of the first tab ending part 1214 and an upper surface of the second tab ending part 1224. In some embodiments, the common electrode part 130 may be joined to a lower surface of the first tab ending part 1214 and a lower surface of the second tab ending part 1224.

In some embodiments, the first tab ending part 1214 and the second tab ending part 1224 may be joined side by side on different surfaces of the common electrode part 130. In some embodiments, the common electrode part 130 may be joined to an upper surface of the first tab ending part 1214 and a lower surface of the second tab ending part 1224. In some embodiments, the common electrode part 130 may be joined to a lower surface of the first tab ending part 1214 and an upper surface of the second tab ending part 1224.

In some embodiments, the step of providing the common electrode part 130 may be omitted. For example, the first electrode tabs 121 and the second electrode tabs 122 may at least partially overlap in a thickness direction of the electrode assembly 101, and in this case, the common electrode part 130 may be omitted.

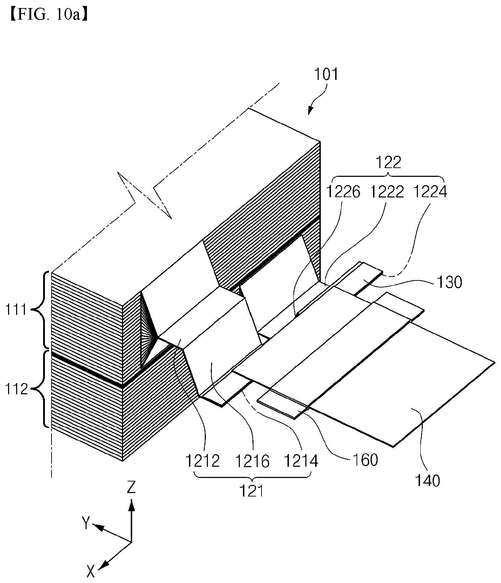

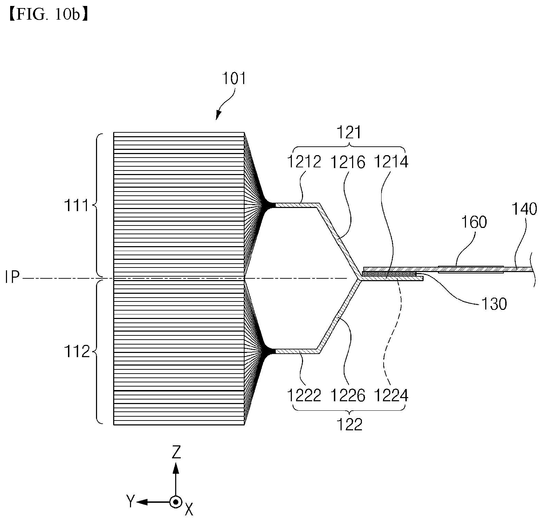

Referring to FIGS. 10a and 10b, an electrode lead 140 is connected to the common electrode part 130. The electrode lead 140 may be a conventional electrode lead known in the art, and is not particularly limited.

The electrode lead 140 may be electrically connected to the first electrode tabs 121 and the second electrode tabs 122. In some embodiments, the electrode lead 140 may be electrically connected to the first tab ending part 1214 through the common electrode part 130. In some embodiments, the electrode lead 140 may be electrically connected to the second tab ending part 1224 through the common electrode part 130.

The electrode lead 140 may be connected to the common electrode part 130 by, for example, welding. If a dimension of the electrode lead 140 in a first direction (e.g., width direction) is sufficiently large, the electrode lead 140 may be directly connected to the first electrode tabs 121 and the second electrode tabs 122 without the common electrode part 130.

In some embodiments, the first electrode tabs 121 and the second electrode tabs 122 may at least partially overlap in a first direction (e.g., thickness direction) parallel to the Z-axis. That is, when the first electrode tabs 121 and the second electrode tabs 122 are projected in the first direction (e.g., thickness direction), the first electrode tabs 121 and the second electrode tabs 122 may overlap each other. In this case, the electrode lead 140 may be inserted between the first electrode tabs 121 and the second electrode tabs 122. That is, the electrode lead 140 may be inserted between the first tab ending part 1214 of the first electrode tabs 121 and the second tab ending part 1224 of the second electrode tabs 122. In some embodiments, the electrode lead 140 may be directly joined to a lower surface of the first tab ending part 1214 and an upper surface of the second tab ending part 1224.

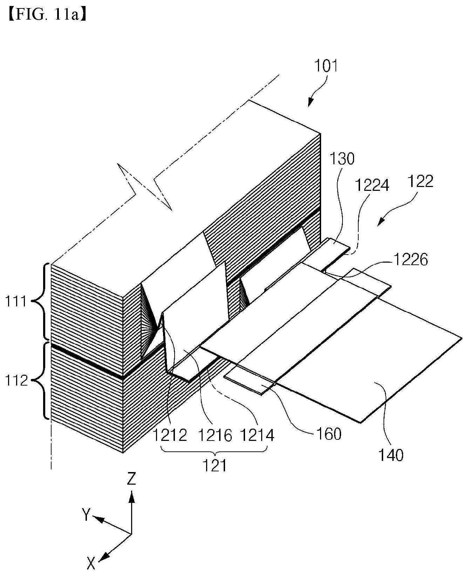

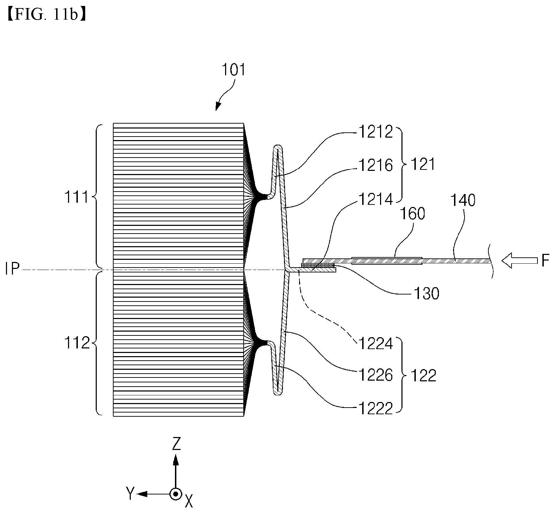

Referring to FIGS. 11a and 11b, a force F may be applied to the first tab ending part 1214 and the second tab ending part 1224 in a second direction (e.g., length direction) along the Y-axis to push the first tab ending part 1214 and the second tab ending part 1224 toward the electrode assembly 101. To this end, the force F may be applied to the electrode lead 140 in the second direction (e.g., length direction). However, the present disclosure is not limited thereto, and the force F may be directly applied to the first tab ending part 1214 and the second tab ending part 1224.

A person skilled in the art will be able to determine a magnitude of the force F in consideration of mechanical properties of the first electrode tabs 121 and the second electrode tabs 122.

In some embodiments, the step of applying the force F to the first tab ending part 1214 and the second tab ending part 1224 may be performed after electrically connecting the first tab ending part 1214 and the second tab ending part 1224 to the electrode lead 140.

In some embodiments, an appropriate force may be applied such that the first merge part 1212 tilts upward in FIG. 11b. In some embodiments, an appropriate force may be applied such that the second merge part 1222 tilts downward in FIG. 11b.

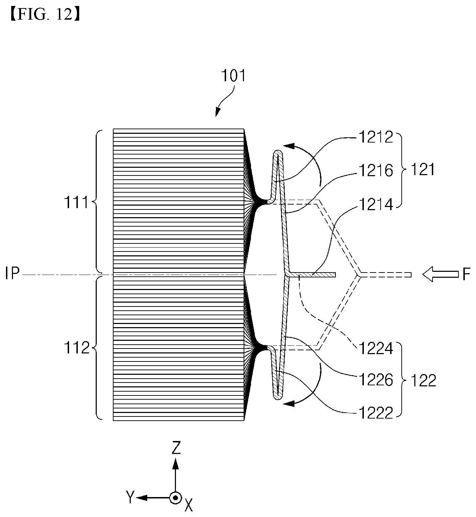

FIG. 12 is a schematic cross-sectional view illustrating an exemplary principle in which the first electrode tabs 121 and the second electrode tabs 122 having the cross-sectional shape illustrated in FIG. 10b are converted into the first electrode tabs 121 and the second electrode tabs 122 having the cross-sectional shape illustrated in FIG. 11b by an external force.

Referring to FIG. 12, the force F may be applied to the first tab ending part 1214 and the second tab ending part 1224. In addition, a predetermined force may be applied upward such that a bent part between the first merge part 1212 and the first connection part 1216 tilts in a counterclockwise direction. Furthermore, a predetermined force may be applied downward such that a bent part between the second merge part 1222 and the second connection part 1226 tilts in a clockwise direction.

As the bent part between the first merge part 1212 and the first connection part 1216 rises in a counterclockwise direction, an angle between the first merge part 1212 and the first connection part 1216 may form an acute angle, for example, 20 degrees or less. In addition, one end of the first connection part 1216 may rise and the other end may advance toward the unit electrodes 111, 112. An angle between the first connection part 1216 and the first tab ending part 1214 may decrease due to the advancement of the unit electrodes 111, 112, but may still maintain an obtuse angle, for example, less than 120 degrees.

As the bent part between the second merge part 1222 and the second connection part 1226 descends in a clockwise direction, an angle between the second merge part 1222 and the second connection part 1226 may form an acute angle, for example, 20 degrees or less. In addition, one end of the second connection part 1226 may rise and the other end may advance toward the unit electrodes 111, 112. An angle between the second connection part 1226 and the second tab ending part 1224 may decrease due to the advancement of the unit electrodes 111, 112, but may still maintain an obtuse angle, for example, less than 120 degrees.

### (fourth embodiment)

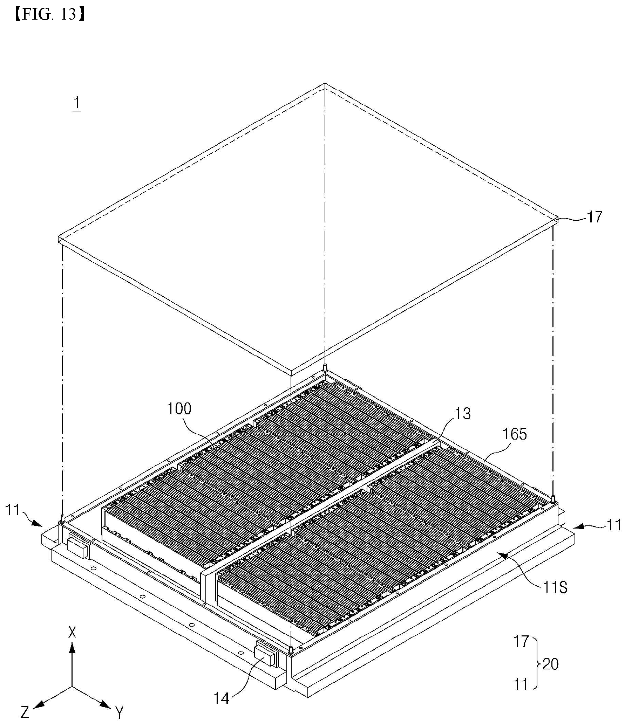

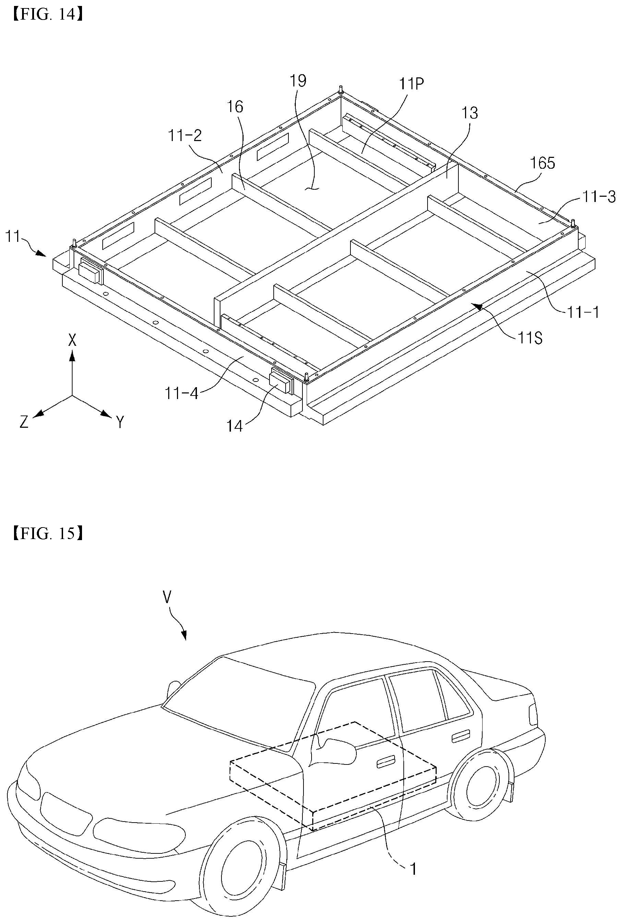

FIG. 13 is a perspective view of a battery pack 1 according to exemplary embodiments of the present disclosure. FIG. 14 is a perspective view illustrating some elements of a battery pack 1 according to exemplary embodiments of the present disclosure.

Referring to FIGS. 13 and 14, the battery pack 1 may include a lower case 11, secondary batteries 100, a center beam 13, cross beams 16, a plurality of exhaust devices 14, a pack gasket 165, and an upper case 17. The battery pack 1 may be a final form of a battery system mounted on mobility or the like. In addition, the secondary batteries 100 may be one or more of the secondary batteries 100 described with reference to FIGS. 1 to 6.

A pack housing 20 defining an exterior of the battery pack 1 may include the lower case 11 and the upper case 17.

The lower case 11 may provide an internal space 19 in which a plurality of secondary batteries 100 are mounted. In some embodiments, the lower case 11 may include a plate part 11P and side walls 11S. Two directions substantially parallel to the plate part 11P are defined as a first direction (e.g., Z-axis direction) and a second direction (e.g., Y-axis direction), and a direction substantially perpendicular to the plate part 11P of the lower case 11 is defined as a third direction (e.g., X-axis direction).

A plurality of secondary batteries 100 may be disposed on the plate part 11P of the lower case 11. The plate part 11P may support the plurality of secondary batteries 100. The plate part 11P may include an upper surface and a lower surface that are substantially parallel. An upper surface of the plate part 11P may face the plurality of secondary batteries 100. A lower surface of the plate part 11P is an opposite surface of the upper surface of the plate part 11P.

The side walls 11S may horizontally surround the plurality of secondary batteries 100. The side walls 11S may protect the plurality of secondary batteries 100 from a lateral direction. The side walls 11S may include a first side wall 11-1, a second side wall 11-2, a third side wall 11-3, and a fourth side wall 11-4. The first to fourth side walls 11-1, 11-2, 11-3, 11-4 may be fixed to each other by a method such as friction stir welding, spot welding, or the like, and are not particularly limited.

The first and second side walls 11-1, 11-2 may be substantially perpendicular to the second direction (e.g., Y-axis direction). The third and fourth side walls 11-3, 11-4 may be substantially perpendicular to the first direction (e.g., Z-axis direction). In some embodiments, the first and second side walls 11-1, 11-2 may cover sides of the plate part 11P. In some embodiments, the third and fourth side walls 11-3, 11-4 may be disposed on the plate part 11P.

In some embodiments, the first to fourth side walls 11-1, 11-2, 11-3, 11-4 may be provided by an extrusion process. According to exemplary embodiments, the first to fourth side walls 11-1, 11-2, 11-3, 11-4 may include an empty space therein, and accordingly, the side walls 11S may be lightened. According to exemplary embodiments, the empty space of the first to fourth side walls 11-1, 11-2, 11-3, 11-4 may be any one of a venting path for gas and a channel for coolant.

Hereinafter, the technical idea of the present disclosure will be described with reference to an embodiment in which each of the plurality of secondary batteries 100 does not include a module frame. However, this is a non-limiting example and does not limit the technical idea of the present disclosure in any sense. A person skilled in the art will be able to easily reach a battery pack employing battery modules including a module frame exposing one edge of battery cells based on what is described herein.

The center beam 13 may isolate elements mounted on the lower case 11 from each other. Accordingly, the center beam 13 may protect the plurality of secondary batteries 100 while preventing unwanted short circuits therebetween.

The center beam 13 may extend between the third and fourth side walls 11-3, 11-4. The center beam 13 may extend in the first direction (e.g., Z-axis direction). The center beam 13 may be in contact with the third side wall 11-3 and the fourth side wall 11-4. The center beam 13 may isolate the plurality of secondary batteries 100 from each other. The center beam 13 may be interposed between the plurality of secondary batteries 100. In some embodiments, the center beam 13 may divide the internal space 19 into two regions in the second direction (e.g., Y-axis direction).

In some embodiments, the cross beams 16 may be provided to divide the internal space 19 into two or more regions in the first direction (e.g., Z-axis direction). The cross beams 16 may additionally isolate elements isolated by the center beam 13.

Some cross beams 16 may extend in the second direction (e.g., Y-axis direction) between the center beam 13 and the first side wall 11-1. Other cross beams 16 may extend in the second direction (e.g., Y-axis direction) between the center beam 13 and the second side wall 11-2. In some embodiments, the cross beams 16 may be provided to define a space in which a stack of one secondary battery or a group of secondary batteries is accommodated.

The arrangement of the center beam 13, the cross beams 16, and the plurality of secondary batteries 100 disclosed in FIGS. 13 and 14 is a non-limiting example and does not limit the technical idea of the present disclosure in any sense. A person skilled in the art will be able to easily reach a battery pack including various arrangements and numbers of center beams and battery cells based on what is described herein.

In some embodiments, a plurality of exhaust devices 14 may be coupled to the fourth side wall 11-4. The fourth side wall 11-4 may include a plurality of exhaust holes connected to the plurality of exhaust devices 14. The plurality of exhaust holes may be configured to provide a path for discharging gas and heat inside the battery pack 1.

The plurality of exhaust devices 14 may be configured to delay thermal propagation by discharging high-temperature gas inside the battery pack 1 to the outside when at least one of the plurality of secondary batteries 100 is in a thermal runaway state.

Here, thermal runaway of the plurality of secondary batteries 100 is a state in which a temperature change of the plurality of secondary batteries 100 further accelerates the temperature change, and is uncontrollable positive feedback. The plurality of secondary batteries 100 in a thermal runaway state exhibits a rapid temperature rise and may discharge a large amount of high-pressure gas and combustion debris.

The battery pack 1 may further include electrical components. In some embodiments, the electrical components may be mounted on the lower case 11. In some embodiments, the electrical components may be disposed between the fourth side wall 11-4 on which the exhaust devices 14 are installed and the plurality of secondary batteries 100. In some embodiments, the electrical components may include any electronic device necessary to drive the battery pack.

In some embodiments, the electrical components may include, for example, a battery management system (BMS). The BMS may be configured to perform monitoring, balancing, and control of the battery pack. In some embodiments, monitoring of the battery pack 1 may include measuring voltage and current of a specific battery cell among the plurality of secondary batteries 100 and measuring temperatures at set positions inside the battery pack 1. In some embodiments, the battery pack 1 may include measuring instruments for measuring the voltage, current, and temperature described above.

Balancing the battery pack 1 is an operation of reducing deviations among the plurality of secondary batteries 100. Control of the battery pack 1 includes preventing occurrence of overcharge, over-discharge, and overcurrent. Through monitoring, balancing, and control, the battery pack 1 can operate under optimal conditions, and accordingly, shortening of a lifespan of each of the plurality of secondary batteries 100 can be prevented or reduced.

The electrical components may further include a cooling device, a power relay assembly (PRA), a safety plug, and the like. The cooling device may include a cooling fan. The cooling fan may prevent overheating of each of the plurality of secondary batteries 100 by circulating air inside the battery pack 1. The PRA may be configured to supply or block power of a high-voltage battery to an external load (e.g., a motor of a vehicle). The PRA may protect the plurality of secondary batteries 100 and the external load (e.g., a motor of a vehicle) by blocking power supply to the external load (e.g., a motor of a vehicle) in a situation where an abnormal voltage such as a voltage surge occurs.

The battery pack 1 may further include a plurality of bus bars configured to electrically connect the plurality of secondary batteries 100. The plurality of secondary batteries 100 may be connected in series and/or in parallel by the plurality of bus bars. Accordingly, the battery pack 1 may be configured to output a high voltage to an external load (e.g., a motor of a vehicle).

The gasket 165 may include a material having elasticity in response to an applied pressure. The gasket 165 may include, for example, rubber synthesized from a material such as ethylene-propylene diene monomer (EPDM). When the lower case 11 and the upper case 17 are coupled, the gasket 165 may be interposed between the lower case 11 and the upper case 17. The lower case 11 and the upper case 17 may press the gasket 165 so that some deformation occurs in the gasket 165. Accordingly, the battery pack 1 may be sealed, and an external fluid may be blocked from the internal space of the battery pack 1.

The upper case 17 may be coupled to the lower case 11. In some embodiments, the upper case 17 may include a main surface and an edge part. The main surface may cover elements mounted on the battery pack 1 such as the plurality of secondary batteries 100 and electrical components. The edge part is a surface in contact with the lower case 11. In some embodiments, the upper case 17 may have a flat plate shape, and in this case, the edge part may horizontally surround the main surface. In some embodiments, the main surface may be elevated compared to the edge part, and the edge part and the main surface may be connected by a bent part.

### (fifth embodiment)

FIG. 15 is a view schematically illustrating the configuration of a vehicle according to an embodiment of the present disclosure.

Referring to FIG. 15, a vehicle V according to an embodiment of the present disclosure may include the battery pack 1 according to the above-described embodiment of the present disclosure. Here, the vehicle V may include, for example, a predetermined vehicle using electricity as a driving source, such as an electric vehicle or a hybrid vehicle. In addition, the vehicle V may further include various other components included in a vehicle, such as a vehicle body or a motor, in addition to the battery pack 1 according to the present disclosure.

The battery pack 1 may be disposed at a predetermined position in the vehicle V. The battery pack 1 may be used as an electrical energy source that drives the vehicle V by providing driving force to a motor of the electric vehicle. In this case, the battery pack 1 may have a high nominal voltage of 100V or more.

The battery pack 1 may be charged or discharged by an inverter according to driving of a motor and/or an internal combustion engine. The battery pack 1 may be charged by a regenerative charging device coupled to a brake. The battery pack 1 may be electrically connected to the motor of the vehicle V through an inverter.

As above, although embodiments of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of embodiments of the present disclosure will not depart from the technology of the present disclosure.

### [Description of Reference Numerals]

100: secondary battery
101: electrode assembly
111: first group of unit electrodes
112: second group of unit electrodes
121: first electrode tabs
122: second electrode tabs
130: common electrode part
140: electrode lead
141: positive electrode lead
145: negative electrode lead
150: battery case
155: sealing part
160: lead film
1212: first merge part
1214: first tab ending part
1216: first connection part
1222: second merge part
1224: second tab ending part
1226: second connection part

## Claims

1. A secondary battery, comprising:
a first group of unit electrodes and a second group of unit electrodes stacked in a first direction;
first electrode tabs extending from one end of the first group of unit electrodes in a second direction intersecting the first direction and joined to each other;
second electrode tabs extending from one end of the second group of unit electrodes in the second direction and joined to each other; and
an electrode lead electrically connected to the first electrode tabs and the second electrode tabs,
wherein the first electrode tabs comprise a first merge part, a first tab ending part extending in an extension direction of the first group of unit electrodes, and a first connection part connecting the first merge part and the first tab ending part, and
the first merge part and the first connection part are connected in a V-shape.

2. The secondary battery of claim 1, wherein
the first merge part is a part of a part where an entirety of the first electrode tabs is joined.

3. The secondary battery of claim 2, wherein
an inner end of the first merge part is disposed substantially at a center in a thickness direction of the first group of unit electrodes.

4. The secondary battery of claim 3, wherein
an outer end of the first merge part is located farther from a plane between the first group of unit electrodes and the second group of unit electrodes compared to the inner end.

5. The secondary battery of claim 1, wherein
the first merge part and the first connection part form an acute angle of 20 degrees or less.

6. The secondary battery of claim 1, wherein
the first connection part and the first tab ending part have an included angle greater than 90 degrees.

7. The secondary battery of claim 6, wherein
the included angle between the first connection part and the first tab ending part is less than 120 degrees.

8. The secondary battery of claim 1, wherein
the first electrode tabs and the second electrode tabs have a cross-sectional shape that is symmetrical with respect to a plane between the first group of unit electrodes and the second group of unit electrodes.

9. The secondary battery of claim 1, wherein
the second electrode tabs comprise a second merge part, a second tab ending part extending substantially parallel to an extension direction of the second group of unit electrodes, and a second connection part connecting the second merge part and the second tab ending part, and
the second merge part and the second connection part are connected in a V-shape.

10. The secondary battery of claim 9, wherein
in a thickness direction of the secondary battery, the first tab ending part and the second tab ending part are located substantially at a same level as each other.

11. The secondary battery of claim 10, further comprising:
a common electrode part connected to the first tab ending part and the second tab ending part,
wherein the first electrode tabs and the second electrode tabs are connected to the electrode lead through the common electrode part.

12. The secondary battery of claim 11, wherein
the electrode lead is coupled to the common electrode part, and
the electrode lead is disposed to at least partially overlap the first tab ending part and the second tab ending part.

13. The secondary battery of claim 9, wherein
the first merge part and the second merge part are offset from each other in a direction perpendicular to the thickness direction of the secondary battery.

14. The secondary battery of claim 13, wherein
the first electrode tabs and the second electrode tabs are disposed so as not to overlap each other in the thickness direction of the secondary battery.

15. The secondary battery of claim 9, wherein
the first merge part and the second merge part are symmetrical with respect to a plane between the first group of unit electrodes and the second group of unit electrodes.

16. The secondary battery of claim 15, wherein the second merge part and the second connection part form an acute angle of 20 degrees or less.

17. The secondary battery of claim 9, wherein the first electrode tabs and the second electrode tabs at least partially overlap in the thickness direction of the secondary battery.

18. The secondary battery of claim 17, wherein the electrode lead is disposed between the first tab ending part and the second tab ending part.

19. A method for manufacturing a secondary battery, the method comprising:
providing a first group of unit electrodes and a second group of unit electrodes stacked in a first direction, wherein
the first group of unit electrodes are provided at one end thereof with first electrode tabs extending from the first group of unit electrodes in a second direction intersecting the first direction and joined to each other,
the second group of unit electrodes are provided at one end thereof with second electrode tabs extending from the second group of unit electrodes in the second direction and joined to each other,
the first electrode tabs comprise a first merge part, a first tab ending part extending in an extension direction of the first group of unit electrodes, and a first connection part connecting the first merge part and the first tab ending part, and
the second electrode tabs comprise a second merge part, a second tab ending part extending in an extension direction of the second group of unit electrodes, and a second connection part connecting the second merge part and the second tab ending part;
electrically connecting the first tab ending part and the second tab ending part to an electrode lead;
tilting the first merge part such that an outer end of the first merge part moves away from the first tab ending part about an inner end of the first merge part; and
tilting the second merge part such that an outer end of the second merge part moves away from the second tab ending part about an inner end of the second merge part.

20. The method of claim 19, wherein the providing the first group of unit electrodes and the second group of unit electrodes comprises:
bending the first electrode tabs joined to each other to form the first merge part, the first tab ending part, and the first connection part; and
bending the second electrode tabs joined to each other to form the second merge part, the second tab ending part, and the second connection part.
